(19) Europäisches Patentamt
European Patent Office
Office européen des brevets

(11) **EP 1 453 228 B1**

(12) **EUROPEAN PATENT SPECIFICATION**

(45) Date of publication and mention
of the grant of the patent:
**23.07.2008 Bulletin 2008/30**

(51) Int Cl.:
*H04B 10/18* (2006.01)     *H04B 10/08* (2006.01)

(21) Application number: **04004488.5**

(22) Date of filing: **27.02.2004**

(54) **Traffic management in optical communication networks**

Verkehrsverwaltung in optischen Kommunikationsnetzen

Gestion de trafic dans des réseaux de communication optique

(84) Designated Contracting States:
**AT BE BG CH CY CZ DE DK EE ES FI FR GB GR HU IE IT LI LU MC NL PT RO SE SI SK TR**

(30) Priority: **27.02.2003 IL 15464703**

(43) Date of publication of application:
**01.09.2004 Bulletin 2004/36**

(73) Proprietor: **ECI Telecom Ltd.**
**Petach-Tikva 49517 (IL)**

(72) Inventors:
• **Mahlab, Uri**
**Or Yehuda 60414 (IL)**
• **Gutin, Michael**
**Petach-Tikva 49670 (IL)**
• **Malomed, Boris**
**Gan-Yavne 70800 (IL)**

(74) Representative: **Modiano, Micaela Nadia**
**Modiano Josif Pisanty & Staub Ltd**
**Thierschstrasse 11**
**80538 München (DE)**

(56) References cited:
**EP-A- 0 849 893          US-A- 5 600 467**
**US-A1- 2002 097 473**

• **ANDERSEN ET AL: "PATH AVERAGE MEASUREMENTS OF OPTICAL FIBER NONLINEARITY USING SOLITONS" JOURNAL OF LIGHTWAVE TECHNOLOGY, vol. 16, no. 12, 12 December 1998 (1998-12-12), pages 2328-2335, XP011029269**
• **TATSUYA TOMARU ET AL: "HETERODYNE AUTOCORRELATION METHOD FOR CHARACTERIZING 1,55 um OPTICAL PULSE TRAIN AND FOR MEASURING DISPERSION AND NONLINEARITY IN OPTICAL FIBERS" JOURNAL OF LIGHTWAVE TECHNOLOGY, vol. 16, no. 11, November 1998 (1998-11), pages 1981-1989, XP011029267**

## Description

### Field of the invention

The proposed invention relates to the field of optical communications.

### Background of the invention

WO 02/23770 A1 describes a method of power control in an optical communication system, for reducing non-linear phenomena in optical fiber wave guides. In the system, by preliminarily determining thresholds of power leading to non-linearity, the radiation power transmitted from node to node is controlled to keep it stabilized at a predetermined level at which optical non-linearity are reduced to less than a predetermined threshold in the optical fiber wave guide. All the operations and conclusions are based on power measurements and comparing thereof with pre-calculated power values.

JP 11266200 (EP 0944191 A1) describes a method and a device for optical communication, to compensate for the wavelength dispersion and the nonlinearity and to attain the transmission of a long distance by controlling the chirp parameter to decrease the code errors of detected electric signals. A 1st end office device has an optical transmitter, which transmits the optical signals having the chirping that is decided by a chirp parameter to an optical fiber transmission line via its 1 st terminal and a control unit, which controls the chirp parameter of the transmitter based on a control signal CS. Meanwhile, a 2nd end office device has an optical receiver, which converts the optical signals transmitted via the line into the electric signals and a monitor unit which detects the code errors of electric signals, which are outputted from the receiver. Then a receiving unit of the device produces the signal CS that is supplied to the control unit to decrease the code errors detected by the monitoring unit, for example. Thus, the chirp parameter is controlled.

According to the above technique, the chirp is introduced in the optical signal to be transmitted via the communication line and is changed in response to measuring the BER.

US 5463661 describes a two-wire modem and a method to select a carrier frequency, a transmitter power level and other parameters to communicate in a full duplex mode, based on received signal and echo characteristics of the communication media estimated by the modem using probing signals; for example, the TX preemphasis and TX power control processor estimates the signal characteristics including non-linear signal distortion of the communication media, and the probing signals include a chirp signal.

The above solution is specifically designed for a two-wire modem electric communication system; the phenomenon of chirp in the electric transmission media is different from that in the optic media.

United States patent publication US2002/0097473 generally relates to an optical communication link that identifies which optical carriers transmitted through an optical fiber contribute to the generation of an undesired mixing product.

The identified optical carriers can then be diminished in amplitude of shifted in wavelength to reduce the impact of the undesirable signals.

G.Rossi et al: "Optical performance monitoring in Reconfigurable WDM Optical Networks Using Subcarrier Multiplexing" Journal of Lightwave Technology (JLT), Vol. 18, no.12, Dec.2000, names "dispersion monitoring" (Chromatic and PMD) and "non-linear distortion monitoring " as two different factors of Optical Performance Monitoring (OPM). However, the document does not mention how non-linear distortion is detected. Though the authors set a task of managing networks using dynamic Optical Performance Monitoring, they do not propose any specific method of detecting non-linearity, nor describe traffic management in a non-linear network.

A Sano et al: "Adaptive Dispersion Equalization by Monitoring Relative Phase Shift between Spacing-fixed WDM Signals",JLT, Vo1.19. No.3. March 2001, suggests monitoring dispersion fluctuation by measuring the relative delay (phase shift) between two different WDM signal channels modulated by two synchronized clocks, and equalizes the dispersion by wavelength tuning.

WO 03/007509A describes a number of schemes for measuring chirp induced by chromatic dispersion, but mentions that the schemes can be used for chromatic dispersion monitoring upon proper calibration i.e., proposes measuring chirp of chromatic dispersion in linear systems, for determining pure chromatic dispersion.

A.E.Wilner et al: "Tunable Compensation of Channel Degrading Effects Using Nonlinearly Chirped Passive Fiber Bragg Gratings", IEEE Journal of Sekected Topicks in Quantum Electronics, Vol.5, no.5, September/October 1999, describes operations of dispersion compensation in optical linear systems and mentions non-linear elements (such as a nonlinearly chirped FBG - Fiber Bragg Grating).

S.Wielandy et al:"Real-time measurement of accumulated chromatic dispersion for automatic dispersion compensation", Electronic Letters, vol.38, no.20, 26.09.2002 also describes how to measure dispersion and to perform dispersion compensation, by utilizing non-linear detectors.

## Summary of the invention

The object of the proposed solution is to provide a new way of overcoming problems mainly caused by non-linearity in optical networks, based on a simple detection of such problems.

The above object can be achieved by providing a method of traffic management in an optical network, based on measuring chirp of optical signals transmitted along an optical path extending in said network.

The above method of traffic management in an optical network, wherein the optical path extends between a first location and a second location being a monitoring point and comprises one ore more optical channels carrying the optical signals, the method comprising:

- measuring chirp at least at one optical channel at the monitoring point;
- in response to the measured chirp, judging about a level of non-linearity in said at least one channel of the optical path up to the monitoring point,
- in case the non-linearity level is considered higher than a selected acceptable level, performing one or more traffic management operations to reduce said non-linearity level.

The step of measuring chirp preferably comprises measuring a second derivative, versus time, of phase of an optical signal transmitted via a particular optical channel.

It should be appreciated that the above-mentioned method can be performed at more than one optical channels of the optical path.

Preferably, the method comprises an additional step of repeating the method from the step of measuring the chirp, up to a moment when the non-linearity level, according to the measured chirp, is considered to be not higher than the selected acceptable level.

The first location, in the frame of the present description, is preferably a network element considered the beginning of the optical path. Such a network element, for example, may be capable of performing one or more of the following functions: transmitting, adding, regenerating, amplifying, switching, routing of optical signals in one or more of the optical channels. The second location may be any point of the network being just equipped with means for chirp measurement, or allowing applying such means.

The traffic management operations are to be understood as one or more selected from the following non-exhaustive list:

- reducing bit rate of at least one of said optical channels;
- rerouting at least one of said optical channels;
- reducing a number of optical channels in the trail;
- transmitting information, previously carried at a specific wavelength, via a vacant optical channel of the same optical path at a different wavelength (so-called frequency hopping).

The operation of rerouting of said at least one optical channel can be performed, for example, by:

- routing the optical signals of one or more of the optical channels for regeneration, and returning said signals back to said optical path,
- routing one or more of the optical channels via a different optical path and returning them to the monitoring point via said different path.

The operation of reducing the number of optical channels can be performed, for instance, by temporarily ceasing transmission of some optical channels via the optical path. It can also be reached, for example, by stopping transmission of add channels via OADM (Optical Add Drop Multiplexer) situated in the optical path.

Actually, if the operation of re-routing some channels is performed via a different optical path, which does not arrive to the monitoring point, it becomes equivalent to the operation of reducing the number of optical channels.

The mentioned acceptable level of non-linearity for a particular optical path can be defined by selecting a threshold value presented by a threshold (maximally acceptable) chirp value, or presented by a threshold (maximally acceptable) bit error rate value (BER). Alternatively, the acceptable level of non-linearity can be defined by selecting a chirp values range, or a mixed chirp/BER values range.

The chirp value range can be selected, for example, based on the exact chirp calculation for the "linear" optical path. Say, the range may be formed by so-called " absolute chirp value" for the linear case and a chirp value exceeding the absolute value by some percent.

Alternatively, the range can be selected using two values for chirp in the optical path being in two somehow differing "non-linear" conditions.

Another option is selecting one (minimal) value of the range to be the absolute chirp value obtained from the exact calculation of the linear optical path, and the other (threshold) value - as a chirp value obtained, for example, from a numerical solution for a non-linear optical path.

Actually, there is yet another option: the lower bound of the range may be selected as a particular chirp value (for example, the absolute chirp value for the linear optical path) and the higher bound of the range - as a maximal acceptable BER value corresponding to a number of chirp values for a number of bit rates.

For the step of judging about a present level of non-linearity, the method preferably comprises performing at least one of the following preliminary operations:

a) calculating chirp for a linear condition of said optical path for at least one of said optical channels, and selecting at least one absolute chirp value based on said calculation,
b) building a number of curves for at least one of said optical channels, wherein each curve reflects dependence between the real chirp and BER at a particular bit rate of optical transmission; and selecting at least a maximal acceptable BER value (corresponding to more than one chirp values associated with different bit rates);
c) obtaining one or more numerical solutions for a real chirp in at least one optical channel of said optical path being in some non-linear condition(s); and selecting at least one real chirp threshold value based on said solutions.

When speaking about "at least one" absolute chirp value or real chirp value, one should understand that different values are usually obtained for respective different points of the optical path, and for different channels. Moreover, different chirp values can be obtained for defining ranges of acceptable non-linearity.

In view of the above, the decision about the present level of non-linearity can be made according to either a " hard decision approach", or a "soft decision approach".

The hard decision approach suits for maintaining linearity of optical lines and means taking the traffic management steps whenever the measured chirp exceeds the absolute chirp value calculated for the linear system.

The soft approach means taking the traffic management steps only when the optical path passes into the condition more non-linear than a so-called "acceptably" non-linear condition (range). The upper bound of such range can be defined either by a selected threshold chirp value different from that of the linear system, or by a selected maximal acceptable BER value for the particular optical channel.

In view of the above, the decision-making may constitute a single step decision or a double-step decision.

The single step decision implies taking traffic management steps whenever the absolute chirp value is exceeded.

In the double-step decision, for example, upon exceeding the absolute chirp value, only partial traffic management steps can be taken or preparations for that can be made. Upon exceeding the non-linearity range (say, upon obtaining a measured chirp corresponding to a BER value exceeding the maximally acceptable BER for the particular optical channel), more or all the required traffic management steps can be performed.

Chirp for the linear condition of a particular optical path can be calculated using a model which describes a multi-channel optical path by a known system of non-linear Schrödinger equations (NLSE), each one for a particular optical channel in the path, taken without their non-linear terms. For the linear case, the model has an exact solution in the form of a Gaussian pulse, which includes a variable of chirp $c(z)$ depending on the length of the trail.

For an exemplary case where the number of optical channels is two, the system of Schrodinger equations can be presented as follows:

$$ i\frac{\partial u}{\partial z} + \frac{1}{2}[D(z) + D_0]\frac{\partial^2 u}{\partial \tau^2} + G(z)(|u|^2 + 2|v|^2)u = 0 $$

$$ i\frac{\partial v}{\partial z} - ik\frac{\partial^2 v}{\partial \tau^2}v_\tau + \frac{1}{2}[D(z) + D_0]\frac{\partial^2 v}{\partial \tau^2}v_{\tau\tau} + G(z)(|v|^2 + 2|u|^2)v = 0 $$

where $\tau = t - z / V_0$ ($z$, $t$ and $V_0$ are the propagation distance along the fiber, time and group velocity of the carrier wave), $k$ is inverse-group-velocity difference between the channels, $D_0$ is average value of the dispersion coefficient, $i$ is $\sqrt{-1}$, $D_z$ is the periodically compensated local dispersion map of the form:

$$D(z) = \begin{cases} D_+, if\, 0 < z < L_+ \\ D_-, if\, L_+ < z < L_- \end{cases} \qquad (3)$$

where L+ is an optical path's section with anomaly dispersion, and L- is a section, of the optical path, with normal dispersion; and where the function G(z) is:

$$G(z) = \exp[-2\gamma z + 2\Gamma \int_0^\tau \sum_n \delta(z - Ln)dz] \qquad (4)$$

where $\gamma$ is the fiber-loss parameter, and $\Gamma$ is the amplifier's gain coefficient accounts for loss and gain in the fiber optical path, and $L_n$ is the distance between amplifiers in the optical path.

The non-linear terms $|u|^2$ and $|v|^2$ in equations (1) and (2) represent the self-phase modulation and cross-phase modulation (SPM and XPM), respectively. In the limit of the linear system (with the SPM and XPM terms dropped in equations (1) and (2), the model has a well-known exact solution in the form of the Gaussian pulse which can be represented in the form:

$$u_0(z,\tau) = a(z)\exp[-\frac{\tau^2}{W^2(z)} + ic(z)\tau^2 + i\phi] \qquad (5)$$

where *a(z)* is the complex amplitude, *W(z)* is real width, $\phi$ is a phase constant and *c(z)* is the real chirp.

For a non-linear system (say, for two optical channels with non-linearity effects), the real chirp values can be obtained from solutions of the equations (1) and (2).

Further, the method can be performed at a number of monitoring points in the optical network, thereby ensuring monitoring of non-linearity effects at optical sections of the network formed between said monitoring points and performing various traffic management operations for reducing these effects at suitable sections, according to the proposed invention.

The prior art references which have been found never proposed to use a relatively simple operation of measuring chirp, occurring in the received signal, as a tool for determining the extent of non-linearity in optical transmission media in real optical networks which have changeable parameters and conditions. Neither of the prior art references proposes controlling traffic in the network based on measuring chirp.

The aim and objects of this invention are achieved by the methods and systems according to independent claim 1 and any other independent claims. Further details may be found in the remaining dependent claims.

**Brief description of the drawings**

Details of the proposed method will be further described and illustrated with the aid of the following non-limiting drawings in which:

**Fig. 1a** schematically illustrates a path in an optical communication network, comprising a number of monitoring points.
**Fig. 1b** shows a chirp behavior diagram schematically illustrating a case when optical path of Fig. 1a is linear.
**Fig. 1c** shows a chirp behavior diagram schematically illustrating a case where the optical path of Fig. 1a is non-linear.
**Fig. 2** shows a look-up table schematically illustrating dependence between bit error rate (BER) and chirp, built for different bit rates of signal transmission for a particular optical channel.
**Fig. 3** schematically illustrates the principle of traffic management, using an example of the ring network architecture and the method according to the invention.
**Fig. 4** schematically illustrates another example of initiating traffic management operations in response to the chirp measurement according to the invention and using an example of a mesh network.

**Detailed description of the invention**

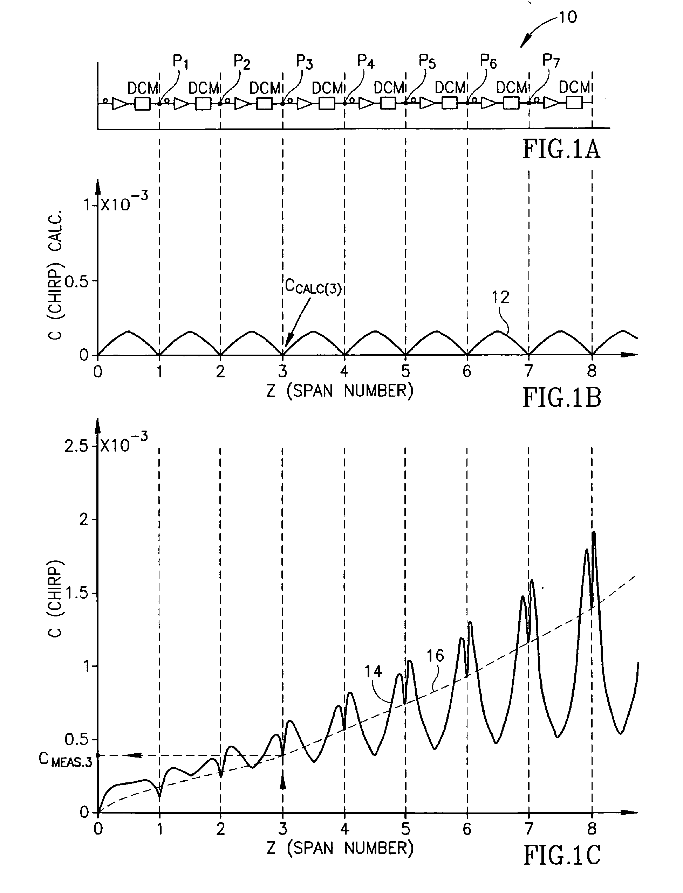

**Fig. 1a** shows an optical path (chain) 10 comprising a number of optical elements and a number of monitoring points, wherein three monitoring points are respectively marked P1, P2, P3. In this particular example, the chain consists of spans each terminating with a DCM (dispersion compensation module) and the monitoring points are positioned after the respective DCMs. It should be appreciated, however, that the monitoring point(s) can be placed at any other point (s) along the optical path. We consider that if the optical path 10 (comprising a number of optical elements connected by fibers) is linear i.e., not demonstrating non-linear effects, distortion of optical signals and chirp may appear in it mainly due to effects of chromatic dispersion.

The dispersion effects can at least partially be compensated by the DCM elements, and that is illustrated in Fig. 1b, where chirp appears and grows with the distance "z" between the monitoring points, or just with the number of spans (curve 12). The chirp curve can be calculated by obtaining chirp values of a linear system, using the equations mentioned above; alternatively, the curve can be obtained using numerical solutions of these same equations for a linear case. In this particular example, the curve 12 is obtained by a numerical simulation of the optical path shown in Fig. 1a.

**Fig. 1c** schematically illustrates how the optical path 10 behaves from the point of chirp when non-linear effects appear in it (line 14). The chirp grows with the distance "z", and its growth due to the non-linearity effects is schematically shown by a dotted curve 16. It should be noted that the character of the curve may be different, since Fig. 1c is a numeric simulation of the optical path of Fig. 1a upon introducing into that a particular non-linearity.

If, according to the invention, chirp is measured at a monitoring point (say, at P3) and its value corresponds to Cmeas.3, it is then compared with the chirp value, which is considered the threshold.

In the frame of the present application, we do not explain exact methods of measuring chirp. However, one may recall that the chirp can be measured at a monitoring point as a second time derivative of phase of optical signal transmitted via a particular optical channel.

Let in this example the predetermined threshold chirp value characterizing the acceptable level of non-linearity at the monitoring point P3 is Ccalc(3) =0 being the absolute chirp value for this point, i.e., the requirements to the optical path are very strict. Whenever the measured chirp value exceeds the threshold chirp value, the network manager will take traffic management steps to avoid the non-linearity effects in the optical path.

It should be noted that the threshold chirp value may be selected, say, to be a value exceeding the absolute calculated chirp of the linear system by a particular percent.

Alternatively, the threshold chirp value may be selected based on a numerical calculation performed for a non-linear optical path. It can be the chirp value for this monitoring point according to the curve 14, or a chirp value according to an additional numerical calculation curve (say, a curve giving a smaller chirp amplitude - not shown).

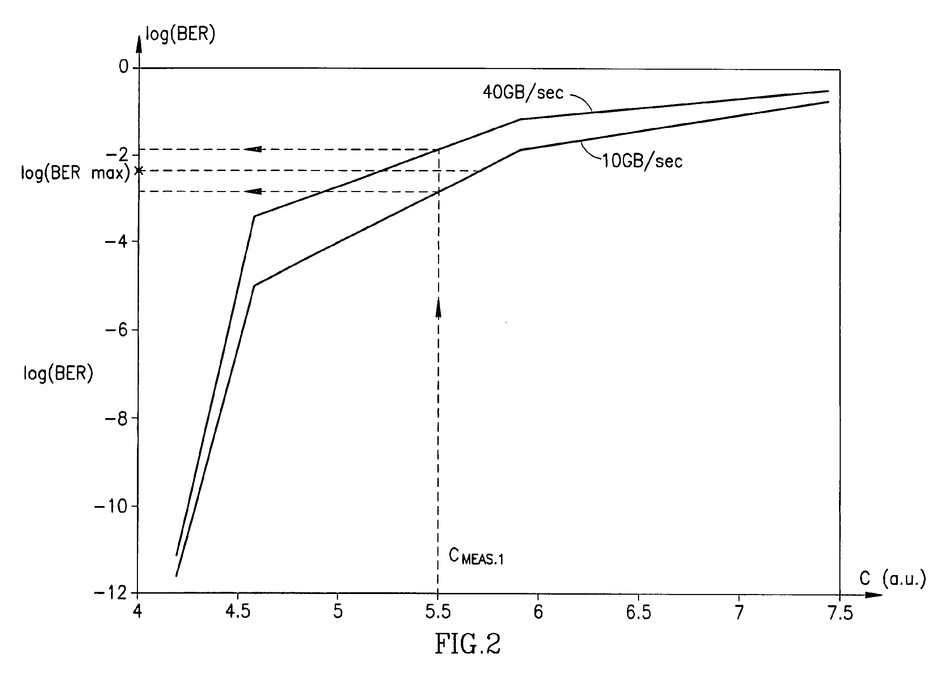

Yet another way of determining whether the optical path is still in the linear region, is checking BER corresponding to the measured chirp value. To do this, the network manager should be provided with look-up tables similar to those shown in Fig. 2, for one or more optical channels.

**Fig. 2** shows a look-up table which comprises two exemplary curves log(BER)/chirp preliminarily built for the path 10, and corresponding to a particular optical channel at the transmission bit rate 10 GBps (the lower line) and at the bit rate 40 Gbps (the upper line). Chirp axis is marked by arbitrary units. In practice, quite a great number of curves corresponding to different bit rates can be preliminarily obtained for the particular optical channel. Consequently, each optical channel can be provided with a similar family of curves.

The curves are built by using numerical simulations using equations (1), (2) performed for one and the same optical path of Fig. 1a but for different bit rates.

When obtaining a measured value of the chirp (say, it is Cmeas.1) for the channel transmitting data at 40 Gbps, and when the corresponding BER exceeds the BERmax accepted for the channel, the network management system may consider reducing the bit rate via the problematic channel so that the accepted level of BER be ensured. It can be carried out by finding two or more BER values on the look-up table, corresponding to the measured chirp value and to different bit rates, and selecting such a bit rate which ensures the accepted level of BER). In this example, the reduced bit rate may be the bit rate of 10 Gbps.

Multi-stage traffic management decisions can be taken in this case, when the measured chirp value indicates exceeding the acceptable non-linearity range.

For example, some network management steps can be performed already upon exceeding the lower bound of the range (say, a particular chirp value), and the bit rate can be reduced if, by some reason, the non-linearity grows and BER exceeds the upper bound of the range (BERmax). Alternatively or in addition, other traffic management operations can be carried out at the upper and/or lower bounds of the range: for example, re-routing of the problematic optical channel can be performed, or the data can be transmitted via another optical channel in the same path to overcome influence of the non-linear effects.

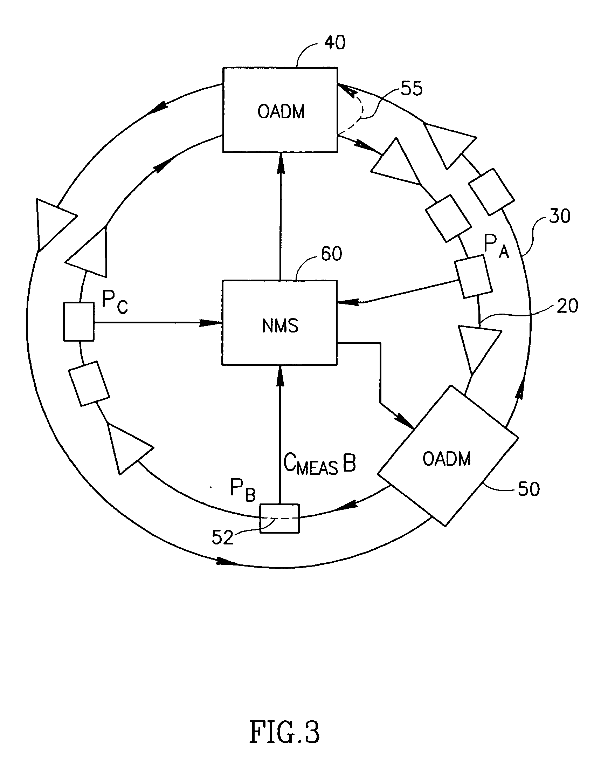

**Fig. 3** schematically illustrates an example of ring-like network where the method according to the invention can be applied.

Let the inner ring 20 of the ring network is the working optical path, and the outer ring 30 - is its protection optical path. Let OADM nodes 40 and 50 are capable of switching optical channels from one trail to another. Let, for example, there are three monitoring points in the working path 20: Pa, Pb an Pc. The ring network is provided with a traffic control unit in a network manager system NMS 60.

If, for example, a chirp value is measured at the monitoring point Pb by a chirp measurement unit 52, the reading is transmitted to the NMS 60. If it is decided in the NMS that the chirp value exceeds a particular accepted chirp/BER level (according to either technique of selecting that accepted level), the NMS 60 will be able to initiate transferring part of the optical channels of the path 20 which previously passed through the OADM 40, to pass via the protection path 30 in the opposite direction (see the dotted line 55). Thus, if such optical channels must be received at OADM 50 of the network, they will be received at the OADM 50, just from the other direction.

The drawing illustrates an example of initiating the traffic management in response to a chirp measurement indicating some excessive non-linearity. In the example, particular optical channels are redirected (re-routed) which actually results in reducing the number of channels in the original optical path 20.

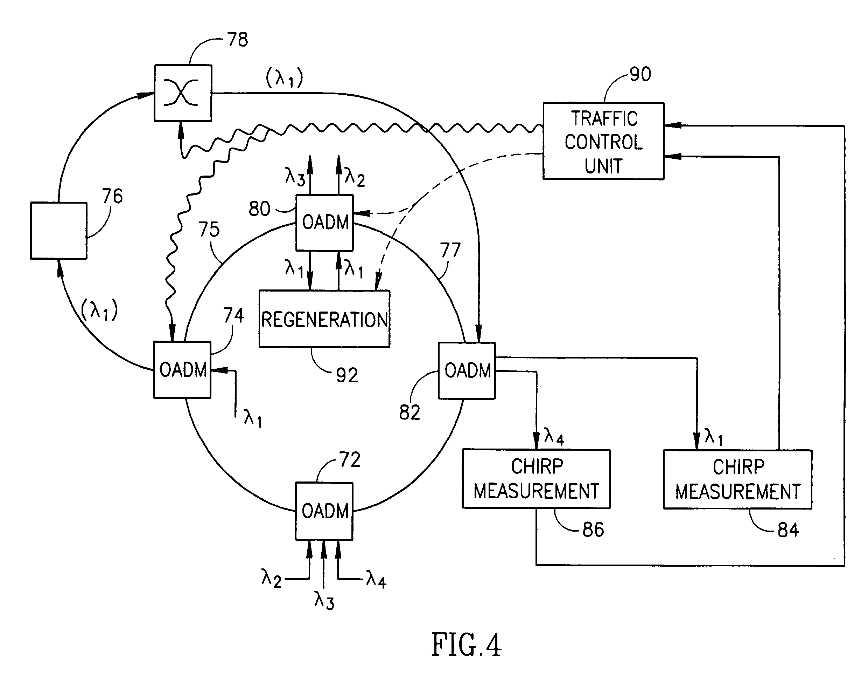

**Fig. 4** illustrates another type of network, for example, a mesh network 70 comprising nodes 72, 74, 76, 78, 80, 82 and others. Let an optical path (trail) of the network between nodes 74 and 82 transmits four optical channels having respective carrier wavelengths $\lambda 2$, $\lambda 3$, $\lambda 4$ added at node 72. The wavelength $\lambda 1$ is added at the node 74. Two channels $\lambda 2$, $\lambda 3$ are dropped at the node 80, and the remaining two channels $\lambda 1$ and $\lambda 4$ should arrive to the node 82 via a fiber 77. The network comprises a monitoring point at the node 82, where two chirp measurement units 84 and 86 measure chirp at respective two optical channels $\lambda 1$ and $\lambda 4$, for further transmitting the readings to a traffic management block 90.

Let, for example, the measured chirp at the channel $\lambda 1$ exceeds the predetermined threshold and some traffic management operations are to be taken for reducing non-linearity of the optical path 77 + 75. The drawing schematically illustrates two optional traffic management operations which can be initiated by the traffic management unit 90.

The first possible traffic control operation is controlling nodes 74 (OADM) and 78 (switch), to re-rout the optical channel with the carrier wavelength $\lambda 1$, so that it would arrive to the node 82 via a different optial path 71-76-78.

The second option of traffic control operation is controlling the node 80 (OADM) to cause dropping of the channel $\lambda 1$ and further adding this same channel to the same OADM 80 after being regenerated by a regenerating unit 92. Such a rerouting operation retains the channel on the same optical path (i.e., the number of channels in the trail does not change), though enables reduction of the non-linearity effects

Another optional traffic management operation is reducing bit rate of transmission in the optical channel with the carrier wavelength $\lambda 1$.

For example, when the traffic control unit 90 receives chirp measurements from the block 84 and, "keeping in mind" the bit rate of the optical channel $\lambda 1$, obtains the corresponding BER from the look-up table stored in its memory, it compares the obtained BER value with some pre-selected acceptable BER. Upon the comparison, the control unit 90 is able to decide whether the current bit rate is still applicable. If the obtained BER exceeds the acceptable BER, the control unit may issue an order that a reduced bit rate should be used in the channel.

If there is a vacant optical channel (not shown) in the optical path, the traffic control unit may decide to perform a so-called "frequency hopping" operation, i.e., to transmit the data of the problematic optical channel via the vacant channel.

While the invention has been described with reference to a number of specific examples, it should be appreciated that other versions of the method can be proposed, and equipment capable of performing the inventive method can be designed. Such various versions of the method and the suitable equipment are to be considered part of the invention and are defined by the claims that follow.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. A method of traffic management in an optical network, based on measuring chirp of optical signals transmitted along an optical path (10, 20, 30, 75, 77) extending in said network, wherein the optical path extends between a first location and a second location being monitoring point (P1, P2, P3, Pa, Pb, Pc, 52, 84, 86) and comprises one or more optical channels carrying the optical signals,
   the method being **characterized in that** it comprises detecting non-linearity in the optical path by:

   - measuring chirp of at least one optical signal at least at one optical channel at the monitoring point;
   - comparing a value of the measured chirp with at least one threshold chirp value determined for said monitoring point of said path being in linear condition,
   - in response to the measured chirp and with reference to said at least one threshold chirp value, judging about a level of non-linearity of the optical path up to the monitoring point,

and **in that** it comprises performing one or more traffic management operations selected from the following non-exhaustive list, in case the non-linearity level is considered higher than a selected acceptable level:

- reducing bit rate of at least one of said optical channels;
- rerouting at least one of said optical channels;
- reducing a number of optical channels in the optical path;
- transmitting information, previously carried at a specific wavelength, via a vacant optical channel of the same optical path at a different wavelength.

2. The method according to claim 1 , wherein the step of measuring chirp comprises measuring a second derivative of phase of an optical signal in said at least one optical channel with respect to time.

3. The method according to Claim 1 or 2 , further comprising a step of repeating the method from the step of measuring the chirp, up to a moment when the non-linearity level is considered to be not higher than the selected acceptable level.

4. The method according to Claim 1 , wherein said operation of rerouting of said at least one optical channel is performed by routing the optical signals of one or more of the optical channels for regeneration, and returning said signals back to said optical path.

5. The method according to Claim 1 , wherein said operation of rerouting of said at least one optical channel is performed by routing one or more of the optical channels via a different optical path and returning thereof to the monitoring point via said different optical path.

6. The method according to Claim 1 , wherein the operation of reducing the number of optical channels is performed by temporarily ceasing transmission of one or more of the optical channels via the optical path.

7. The method according to any one of the preceding claims , wherein said acceptable level of non-linearity is defined by said threshold chirp value determined for at least one said monitoring point, wherein said monitoring point being located at the output of a dispersion compensation module DCM utilized in the optical path.

8. The method according to any one of the preceding claims , wherein said acceptable level of non-linearity is defined for a particular optical signal transmitted in a particular optical channel of said optical path, by selecting an additional threshold chirp value corresponding to a threshold BER (bit error rate) value being a maximally acceptable BER value for said specific optical signal, the method thereby allowing detection of an approaching non-linearity condition.

9. The method according to any one of claims 1 to 7 , wherein said acceptable level of non-linearity is defined by selecting a range between a lower bound and an upper bound, where the lower bound is presented by said threshold chirp value calculated for the optical path in its linear condition, and the upper bound is presented by an additional threshold chirp value corresponding to a maximally acceptable value of BER (bit error rate) for a particular optical signal transmitted in a particular optical channel of the optical path, the method thereby allowing detection of an approaching non-linearity condition.

10. The method according to Claim 9 , wherein the traffic management operations are performed gradually, some of them upon exceeding the lower bound and some of them upon exceeding the upper bound of said range.

11. The method according to any one of the preceding claims , further comprising preliminarily calculating chirp for a linear condition of said optical path for at least one of said optical channels, and obtaining said at least one threshold chirp value based on said calculations;
and performing at least one preliminary operation selected from the following non-exhaustive list:

- building a number of curves for at least one of said optical channels, wherein each curve reflects dependence between a real chirp and BER at a particular bit rate of optical transmission; and selecting at least one threshold BER value for the number of said bit rates;
- performing numerical calculations of a real chirp for at least one of said optical channels of the optical path being in a non-linear condition; and selecting at least one non-linear chirp threshold value based on said calculations.

12. The method according to any one of the preceding claims , being performed at two or more optical channels of the optical path.

**13.** The method according to any one of the preceding claims , comprising performing thereof at a number of monitoring points in the optical network, thereby ensuring monitoring of non-linearity effects at sections of the network formed between the monitoring points, and performing various traffic management operations for reducing the non-linearity effects at suitable sections of the network.

**14.** A system for performing traffic management in an optical network **characterized in that** the system is capable of detecting non-linearity by measuring chirp of optical signals transmitted in optical channels along an optical path extending in said network; the system comprising:

at least one chirp measurement unit (52, 84, 86) capable of measuring chirp of an optical signal at least at one optical channel and at least at one monitoring point in the optical path, and of producing an output signal carrying information on the measured chirp;
a traffic management block (60, 90) in communication with said at least one chirp measurement unit (52, 84, 86); the traffic management block (60, 90) comprising means for accessing information on acceptable level of non-linearity for said at least one optical channel and said at least one monitoring point, wherein the acceptable level of non-linearity being selected using at least one threshold chirp value among the following three: a threshold chirp value determined for a linear condition of said path, a threshold chirp value corresponding to a maximal acceptable BER value, a threshold chirp value calculated for a non-linear condition of said path;
the traffic management block being capable of:

- receiving said output signal from said at least one chirp measurement unit (52, 84, 86),
- judging about a level of non-linearity in said at least one optical channel based on said information, and
- in case the non-linearity level is considered higher than a the selected acceptable level of non linearity for said optical channel, performing one or more traffic management operations to reduce said non-linearity level.

**Patentansprüche**

**1.** Ein Verfahren für die Verkehrsverwaltung in einem optischen Netzwerk, das auf dem Messen von Zwitschern von optischen Signalen basiert, die an einem sich im Netzwerk erstreckenden optischen Weg (10, 20, 30, 75, 77) übertragen werden, wobei sich der optische Weg zwischen einem ersten Standort und einem zweiten Standort erstreckt, ein Überwachungspunkt (P1, P2, P3, Pa, Pb, Pc, 52, 84, 86) ist, und einen oder mehrere optische Signale umfasst, die die optischen Signale mit sich führen;
wobei das Verfahren **dadurch gekennzeichnet ist, dass** es die Erfassung der Nicht-Linearität im optischen Weg umfasst, indem es:

das Zwitschern mindestens eines optischen Signals zumindest an einem optischen Kanal an dem Überwachungspunkt misst;
einen Wert des gemessenen Zwitscherns mit mindestens einem Zwitschern-Schwellwert vergleicht, der für den überwachungspunkt des Wegs bestimmt wird, der in linearer Bedingung befindlich ist;
als Reaktion auf das gemessene Zwitschern und unter Bezugnahme auf den mindestens einen Zwitschern-Schwellwert einen Nicht-Linearitätsgrad des optischen Wegs bis hin zum Überwachungspunkt beurteilt;
und **dadurch**, dass es einen oder mehrere Verkehrsverwaltungsbetriebe durchführt, die für den Fall, dass der Nicht-Linearitätsgrad als höher als ein ausgewählter annehmbarer Grad angesehen wird, aus der folgenden nicht erschöpfenden Liste ausgewählt werden;
das Reduzieren der Bitrate von zumindest einem der optischen Kanäle;
das Umleiten von zumindest einem der optischen Kanäle;
das Reduzieren einer Anzahl optischer Kanäle im optischen Weg;
das Übertragen der zuvor an einer bestimmten Wellenlänge mitgeführten Information über einen unbesetzten optischen Kanal desselben optischen Wegs an einer anderen Wellenlänge.

**2.** Das Verfahren nach Anspruch 1, worin der Schritt zum Messen des Zwitscherns das Messen einer zweiten Phasenableitung eines optischen Signals in dem mindestens einen optischen Kanal in Bezug auf die Zeit umfasst.

**3.** Das Verfahren nach Anspruch 1 oder 2, das weiterhin einen Schritt zum Wiederholen des Verfahrens vom Schritt des Messens des Zwitscherns bis hin zu einem Zeitpunkt umfasst, an dem der Nicht-Linearitätsgrad als nicht höher als der ausgewählte annehmbare Grad angesehen wird.

4.  Das Verfahren nach Anspruch 1, worin der Betrieb zum Umleiten des mindestens einen optischen Kanals durch das Umleiten der optischen Signale von einem oder mehreren der optischen Kanäle für ihre Regeneration und das Rückführen der Signale zurück an den optischen Weg durchgeführt wird.

5.  Das Verfahren nach Anspruch 1, worin der Betrieb zum Umleiten des mindestens einen optischen Kanals durch das Leiten von einem oder mehreren optischen Kanälen über einen anderen optischen Weg und ihr Rückführen an den Überwachungspunkt über den anderen optischen Weg durchgeführt wird.

6.  Das Verfahren nach Anspruch 1, worin der Betrieb zum Reduzieren der Anzahl an optischen Kanälen durch das zeitweilige Einstellen der Übertragung der einen oder mehreren optischen Kanäle über den optischen Weg durchgeführt wird.

7.  Das Verfahren nach irgendeinem der vorherigen Ansprüche, worin der annehmbare Nicht-Linearitätsgrad durch den Zwitschern-Schwellwert definiert wird, der für mindestens einen Überwachungspunkt bestimmt wird, worin sich der Überwachungspunkt an der Ausgabe eines im optischen Weg verwendeten Dispersionskompensatinsmoduls DCM befindet.

8.  Das Verfahren nach irgendeinem der vorherigen Ansprüche, worin der annehmbare Nicht-Linearitätsgrad für ein in einem bestimmten optischen Kanal des optischen Wegs übertragenes spezielles optisches Signal bestimmt wird, indem ein zusätzlicher Zwitschern-Schwellwert ausgewählt wird, der einem Schwellwert-BER (Bitfehlerrate)-Wert entspricht, der für das bestimmte optische Signal ein maximal annehmbarer BER-Wert ist, wobei das Verfahren **dadurch** die Erfassung einer sich annähernden Nicht-Linearitätsbedingung erlaubt.

9.  Das Verfahren nach irgendeinem der Ansprüche 1 bis 7, worin der annehmbare Nicht-Linearitätsgrad durch die Auswahl eines Bereichs zwischen einer unteren und einer oberen Grenze bestimmt wird, worin die untere Grenze durch den Zwitschern-Schwellwert angezeigt wird, der für den optischen Weg in seiner linearen Bedingung berechnet wird, und die obere Grenze durch einen zusätzlichen Zwitschern-Schwellwert angezeigt wird, der einem maximal annehmbaren Wert der BER (Fehlerbitrate) für ein in einem bestimmten optischen Kanal des optischen Wegs übertragenes bestimmtes optisches Signal entspricht, wobei das Verfahren **dadurch** die Erfassung einer sich annähernden Nicht-Linearitätsbedingung erlaubt.

10. Das Verfahren nach Anspruch 9, worin die Verkehrsverwaltungsbetriebe graduell durchgeführt werden, einige von ihnen beim Überschreiten des unteren Grenz- und einige von ihnen beim Überschreiten des oberen Grenzbereichs.

11. Das Verfahren nach irgendeinem der vorherigen Ansprüche, das weiterhin das vorläufige Berechnen des Zwitscherns für eine lineare Bedingung des optischen Wegs für mindestens einen der optischen Kanäle umfasst und das Erhalten des mindestens einen Zwitschern-Schwellwerts auf der Grundlage der Berechnungen umfasst; und das Durchführen des mindestens einen vorläufigen Betriebs, der aus der folgenden nicht erschöpfenden Liste ausgewählt wird:

    das Aufbauen einer Anzahl an Kurven für mindestens einen der optischen Kanäle, worin jede Kurve die Abhängigkeit zwischen einem echten Zwitschern und der BER bei einer bestimmten Bitrate oder optischen Übertragung widerspiegelt; und das Auswählen mindestens eines Schwellwert-BER-Werts für die Anzahl der Bitraten; das Durchführen numerischer Berechnungen eines echten Zwitscherns für mindestens einen der in einer nichtlinearen Bedingung befindlichen optischen Kanäle des optischen Weg; und das Auswählen des mindestens einen nicht linearen Zwitschern-Schwellwerts auf der Grundlage der Ber-echnungen.

12. Das Verfahren nach irgendeinem der vorherigen Ansprüche, das an zwei oder mehreren optischen Kanälen des optischen Wegs durchgeführt wird.

13. Das Verfahren nach irgendeinem der vorherigen Ansprüche, das seine Durchführung an einer Reihe an Überwachungspunkten im optischen Netzwert umfasst, wodurch die Überwachung von Nicht-Linearitätseffekten an zwischen den Überwachungspunkten gebildeten Abschnitten des Netzwerks gewährleistet wird und wobei verschiedene Verkehrsverwaltungsbetriebe zum Reduzieren der Nicht-Linearitätseffekte an geeigneten Abschnitten des Netzes durchgeführt werden.

**14.** Ein System zum Durchführen der Verkehrsverwaltung in einem optischen Netz, **dadurch gekennzeichnet, dass** das System zum Erfassen der Nicht-Linearität in der Lage ist, indem es das Zwitschern von optischen Signalen misst, die in optischen Kanälen an einem sich in das Netzwerk erstreckenden optischen Weg übertragen werden, wobei das System Folgendes umfasst:

mindestens eine Zwitschern-Messeinheit (52, 84, 86), die zum Messen eines Zwitscherns eines optischen Signals zumindest an einem optischen Kanal und zumindest an einem Überwachungspunkt im optischen Weg, und zum Erzeugen eine Ausgabesignals in der Lage ist, das die Information über das gemessene Zwitschern mit sich führt;
einen Verkehrsverwaltungsblock (60, 90) in Kommunikation mit der mindestens einen Zwitschern-Messeinheit (52, 84, 86);

wobei der Verkehrsverwaltungsblock (60, 90) ein Mittel für den Zugriff auf Information umfasst, betreffend einen annehmbaren Nicht-Linearitätsgrad für den mindestens einen optischen Kanal und den mindestens einen Überwachungspunkt, worin der annehmbare Nicht-Linearitätsgrad mittels Verwendung von mindestens einem Zwitschern-Schwellwert unter den folgenden dreien ausgesucht wird: einem Zwitschern-Schwellwert, der für eine lineare Bedingung des Wegs bestimmt wird, einem Zwitschern-Schwellwert, der einem maximal annehmbaren BER-Wert entspricht, und einem Zwitschern-Schwellwert, der für eine nicht lineare Bedingung des Wegs berechnet wird; wobei der Verkehrsverwaltungsblock in der Lage ist:

das Ausgabesignal von der mindestens einen Zwitschern-Messeinheit (52, 84, 86) zu empfangen, einen Nioht-Lznearitätsgrad in dem mindestens einen optischen Kanal auf der Grundlage der Information zu beurteilen; und
für den Fall, dass der Nicht-Linearitätsgrad als höher als ein ausgesuchter annehmbarer Nicht-Linearitätsgrad für den optischen Kanal angesehen wird, einen oder mehrere Verkehrsverwaltungsbetriebe durchzuführen, um den Nicht-Linearitätsgrad zu reduzieren.

## Revendications

**1.** Procédé de gestion de trafic dans un réseau optique, basé sur la mesure de la compression d'impulsions de signaux optiques transmis le long d'un chemin optique (10, 20, 30, 75, 77) s'étendant dans le dit réseau, dans lequel le chemin optique s'étend entre un premier endroit et un deuxième endroit, qui est un point de contrôle (P1, P2, P3, Pa, Pb, Pc, 52, 84, 86), et comprend un ou plusieurs canaux optiques véhiculant les signaux optiques, le procédé étant **caractérisé en ce qu'**il comprend la détection d'une non-linéarité dans le chemin optique par :

- mesure de la compression d'impulsions d'au moins un signal optique au moins dans un canal optique au point de contrôle ;
- comparaison d'une valeur de la compression d'impulsions mesurée avec au moins une valeur de compression d'impulsions de seuil déterminée pour le dit point de contrôle du dit chemin qui est dans une condition linéaire ;
- en réponse à la compression d'impulsions mesurée et avec référence à la dite au moins une valeur de compression d'impulsions de seuil, jugement relatif à un niveau de non-linéarité du chemin optique jusqu'au point de contrôle ;

et **en ce qu'**il comprend l'exécution d'une ou plusieurs opérations de gestion de trafic sélectionnées parmi la liste non exhaustive ci-après, dans le cas où le niveau de non-linéarité est considéré comme supérieur à un niveau acceptable sélectionné :

- réduction du débit binaire d'au moins un des dits canaux optiques ;
- reroutage d'au moins un des dits canaux optiques ;
- réduction d'un nombre de canaux optiques dans le chemin optique ;
- transmission d'informations, précédemment transportées à une longueur d'onde spécifique, via un canal optique libre du même chemin optique à une longueur d'onde différente.

**2.** Procédé selon la revendication 1, dans lequel l'étape de mesure de la compression d'impulsions comprend la mesure d'une dérivée seconde de la phase d'un signal optique dans le dit au moins un canal optique en fonction du temps.

**3.** Procédé selon la revendication 1 ou 2, comprenant en outre une étape de répétition du procédé à partir de l'étape de mesure de la compression d'impulsions jusqu'à un moment où le niveau de non-linéarité est considéré comme étant non supérieur au niveau acceptable sélectionné.

**4.** Procédé selon la revendication 1, dans lequel la dite opération de reroutage du dit au moins un canal optique est effectuée par routage des signaux optiques d'un ou plusieurs des canaux optiques pour régénération, et retour des dits signaux au dit chemin optique.

**5.** Procédé selon la revendication 1, dans lequel la dite opération de reroutage du dit au moins un canal optique est effectuée par routage d'un ou plusieurs des canaux optiques via un chemin optique différent, et leur retour au point de contrôle via le dit chemin optique différent.

**6.** Procédé selon la revendication 1, dans lequel l'opération de réduction du nombre de canaux optiques est effectuée par cessation temporaire de la transmission d'un ou plusieurs des canaux optiques via le chemin optique.

**7.** Procédé selon une quelconque des revendications précédentes, dans lequel le dit niveau acceptable de non-linéarité est défini par la dite valeur de compression d'impulsions de seuil déterminée pour au moins un dit point de contrôle, et dans lequel le dit point de contrôle est situé à la sortie d'un module de compensation de dispersion DCM utilisé dans le chemin optique.

**8.** Procédé selon une quelconque des revendications précédentes, dans lequel le dit niveau acceptable de non-linéarité est défini pour un signal optique particulier transmis dans un canal optique particulier du dit chemin optique, par sélection d'une valeur de compression d'impulsions de seuil additionnelle correspondant à un taux d'erreurs sur les bits (BER) de seuil qui est une valeur de BER maximale acceptable pour le dit signal optique spécifique, le procédé permettant ainsi la détection d'un état de non-linéarité en approche.

**9.** Procédé selon une quelconque des revendications 1 à 7, dans lequel le dit niveau acceptable de non-linéarité est défini par sélection d'une plage entre une limite inférieure et une limite supérieure, la limite inférieure étant présentée par la dite valeur de compression d'impulsions de seuil calculée pour le chemin optique dans sa condition linéaire, et la limite supérieure étant présentée par une valeur de compression d'impulsions de seuil additionnelle correspondant à une valeur acceptable de façon maximale de BER (taux d'erreurs sur les bits) pour un signal optique particulier transmis dans un canal optique particulier du chemin optique, le procédé permettant ainsi la détection d'une condition de non-linéarité en approche.

**10.** Procédé selon la revendication 9, dans lequel les opérations de gestion de trafic sont effectuées progressivement, certaines d'entre elles lors du dépassement de la limite inférieure et certaines d'entre elles lors du dépassement de la limite supérieure de la dite plage.

**11.** Procédé selon une quelconque des revendications précédentes, comprenant en outre le calcul préliminaire de la compression d'impulsions pour une condition linéaire du dit chemin optique pour au moins un des dits canaux optiques, et l'obtention de la dite au moins une valeur de compression d'impulsions de seuil sur la base des dits calculs ; et
l'exécution d'au moins une opération préliminaire choisie dans la liste non exhaustive ci-après:

   - construction d'un certain nombre de courbes pour au moins un des dits canaux optiques, de sorte que chaque courbe reflète la dépendance entre une compression d'impulsions réelle et la valeur de BER à un débit binaire particulier de transmission optique, et sélection d'au moins une valeur BER de seuil pour le dit nombre de dits débits binaires ;
   - exécution de calculs numériques d'une compression d'impulsions réelle pour au moins un des dits canaux optiques du chemin optique étant dans une condition non linéaire, et sélection d'au moins une valeur de seuil de compression d'impulsions non-linéaire sur la base des dits calculs.

**12.** Procédé selon une quelconque des revendications précédentes, exécuté sur deux canaux optiques ou plus du chemin optique.

**13.** Procédé selon une quelconque des revendications précédentes, comprenant son exécution à un certain nombre de points de contrôle du réseau optique, afin d'assurer le contrôle des effets de non linéarité dans des sections du réseau formées entre les points de contrôle, et l'exécution de diverses opérations de gestion de trafic pour réduire les effets de non-linéarité dans des sections appropriées du réseau.

**14.** Système pour l'exécution d'une gestion de trafic dans un réseau optique, **caractérisé en ce que** le système peut détecter une non-linéarité par mesure de la compression d'impulsions de signaux optiques transmis dans des canaux optiques le long d'un chemin optique s'étendant dans le dit réseau ; le système comprenant :

au moins une unité de mesure de compression d'impulsions (52, 84, 86) capable de mesurer la compression d'impulsions d'un signal optique au moins sur un canal optique et au moins à un point de contrôle dans le chemin optique, et de produire un signal de sortie portant des informations sur la compression d'impulsions mesurée ;
un bloc de gestion de trafic (60, 90) en communication avec la dite au moins une unité de mesure de compression d'impulsions (52, 84, 86), le bloc de gestion de trafic (60, 90) comprenant un moyen d'accès à des informations sur un niveau acceptable de non-linéarité pour le dit au moins un canal optique et le dit au moins un point de contrôle, dans lequel le niveau acceptable de non-linéarité est choisi par utilisation d'au moins une valeur de compression d'impulsions de seuil parmi les trois valeurs suivantes : une valeur de compression d'impulsions de seuil déterminée pour une condition linéaire du dit chemin, une valeur de compression d'impulsions de seuil correspondant à une valeur de BER acceptable maximale, une valeur de compression d'impulsions de seuil calculée pour une condition non linéaire du dit chemin ;

le bloc de gestion de trafic pouvant :

- recevoir le dit signal de sortie provenant de la dite au moins une unité de mesure de compression d'impulsions (52, 84, 86),
- juger un niveau de non-linéarité dans le dit au moins un canal optique sur la base des dites informations, et
- dans le cas où le niveau de non-linéarité est considéré comme plus grand que le niveau acceptable sélectionné de non-linéarité pour le dit canal optique, exécuter une ou plusieurs opérations de gestion de trafic pour réduire le dit niveau de non-linéarité.

FIG.1A

FIG.1B

FIG.1C

FIG.2

FIG.3

FIG.4

EP 1 453 228 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0223770 A1
- JP 11266200 B
- EP 0944191 A1
- US 5463661 A
- US 20020097473 A
- WO 03007509 A

**Non-patent literature cited in the description**

- **G.ROSSI et al.** Optical performance monitoring in Reconfigurable WDM Optical Networks Using Subcarrier Multiplexing. *Journal of Lightwave Technology (JLT,* December 2000, vol. 18 (12
- **A SANO et al.** Adaptive Dispersion Equalization by Monitoring Relative Phase Shift between Spacing-fixed WDM Signals. *JLT,* March 2001, vol. 19 (3
- **A.E.WILNER et al.** Tunable Compensation of Channel Degrading Effects Using Nonlinearly Chirped Passive Fiber Bragg Gratings. *IEEE Journal of Sekected Topicks in Quantum Electronics,* September 1999, vol. 5 (5
- **S.WIELANDY et al.** Real-time measurement of accumulated chromatic dispersion for automatic dispersion compensation. *Electronic Letters,* 26 September 2002, vol. 38 (20